# DEMANDE DE BREVET EUROPEEN

(11) **EP 0 537 036 A1**
(43) Date de publication de la demande: **14.04.1993**
(21) Numéro de dépôt: 92402376.5
(22) Date de dépôt: 01.09.1992
(51) Int. Cl.: H04L 12/56

(54) **Procédé pour l'acheminement d'un paquet de données dans un réseau de transmission numérique**

(30) Priorité: 06.09.1991 FR 9111051
(71) Demandeur: THOMSON-CSF, 75008 Paris (FR)
(72) Inventeur: Brisson, Jacques, F-92045 Paris la Défense (FR); Caillemer, Jean, F-92045 Paris la Défense (FR); Grenot, Thierry, F-92045 Paris la Défense (FR)
(74) Mandataire: Benoit, Monique

(57) **Abrégé**

Procédé pour l'acheminement d'un paquet de données dans un réseau de transmission numérique où chaque paquet (31, 32) est composé d'un en-tête (31) permettant de l'identifier et de le guider, et d'une partie (32) contenant des informations à véhiculer. Ce procédé consiste au niveau de chaque noeud du réseau, suivant une première étape (51) à extraire de l'en-tête l'adresse d'un mot (54) d'une mémoire (53) contenant les informations nécessaires à l'identification de l'en-tête (52) et au guidage des données véhiculées par le paquet entrant au noeud, suivant une deuxième étape (55) à créer d'après l'en-tête (52) du paquet entrant et des informations contenues dans le mot (54) de la mémoire (53) une nouvelle adresse (A) pointant une zone (501, 502, 503, 504) de mémoire (56) contenant au moins un nouvel en-tête (505) et l'information de direction sortant (506) par le ou les paquets sortant du noeud.

Application : réseaux de transmission numérique où il est nécessaire d'identifier et d'aiguiller des paquets de données.

## Description

La présente invention concerne un procédé pour l'acheminement d'un paquet de données dans un réseau de transmission numérique. Elle s'applique notamment aux équipements de brassage et de commutation de données numériques composant un réseau fonctionnant en mode ATM suivant les initiales de l'expression anglo-saxonne " Asynchronous Transfert Mode". Ce mode de transmission asynchrone a été adopté par le Comité Consultatif International Télégraphique et Téléphonique (CCITT) pour les réseaux numériques à intégration de services large bande plus connus sous l'abréviation RNIS-LB. Plus généralement, l'invention s'applique à tous les réseaux de transmission de données numériques où il est nécessaire d'identifier et d'aiguiller ces données.

Dans un réseau fonctionnant en mode ATM par exemple, les informations numérisées sont échangées entre les noeuds du réseau sous forme de paquets de bits de format fixe appelés "cellules", un bit étant un élément binaire prenant la valeur 0 ou 1. Une cellule est composée d'un en-tête permettant d'identifier la cellule et notamment à quelle communication elle appartient, et d'un champ d'information contenant les données utiles à véhiculer. Le rôle des éléments de brassage et de commutation formant les noeuds du réseau est d'aiguiller les cellules arrivant sur leurs entrées vers l'une ou plusieurs de leurs sorties. Pour cela, il faut notamment procéder à l'analyse de l'en-tête de chaque cellule entrante de façon à en déduire d'une part, l'en-tête qu'aura la cellule en sortant et d'autre part, la ou les directions de sortie à emprunter. Les cellules entrant ou sortant des noeuds sont véhiculées par des faisceaux virtuels encore appelés selon l'expression anglo-saxonne "virtual path". Ces faisceaux sont dits virtuels car ils peuvent en fait être supportés par une même ligne physique de transmission, en fibre optique ou en câble coaxial par exemple. Ces faisceaux sont eux-mêmes subdivisés en voies ou canaux virtuels encore appelés selon l'expression anglo-saxonne "virtual channel". Chacun des faisceaux ou canaux susceptibles d'entrer ou de sortir d'un noeud sont repérés par des numéros d'identification notés VPI pour les faisceaux et VCI pour les canaux, VPI et VCI étant respectivement les abréviations des expressions anglo-saxonnes "Virtual Path Identifier" et "Virtual Channel Identifier". En général les identificateurs VPI et VCI peuvent prendre un grand nombre de valeurs en raison du nombre élevé de faisceaux et de canaux possibles, typiquement plusieurs centaines de milliers, c'est le cas en particulier dans les réseaux fonctionnant en mode ATM. Elle cause des inconvénients, notamment au niveau des capacités de mémoire et de leurs taux d'utilisation. En effet pour un noeud donné du réseau, la gestion de tous ces faisceaux, canaux et identificateurs associés nécessite l'utilisation de mémoires vives ayant de très grandes capacités mémoires. Or, en exploitation, à un instant donné, il est très peu probable d'avoir à utiliser l'ensemble des combinaisons de VPI et de VCI possibles, d'où une sous-utilisation très accentuée de la mémoire réservée.

Le but de l'invention est de pallier les inconvénients précités. A cet effet l'invention a pour objet un procédé pour l'acheminement d'un paquet de données dans un réseau de transmission numérique utilisant au moins une mémoire, chaque paquet transitant dans des canaux virtuels eux-même contenus dans des faisceaux virtuels, étant composé d'un en-tête contenant au moins les numéros des faisceaux et des canaux virtuels qu'il emprunte, et d'une partie contenant des informations à véhiculer, caractérisé en ce qu'il consiste à chaque noeud du réseau et pour chaque paquet entrant :
- suivant une première étape à pointer un mot d'une première partie de la mémoire contenant au moins une partie de mot définissant l'adresse d'une deuxième partie de la mémoire, l'adresse du mot contenant au moins le numéro d'identification du faisceau dans lequel transite le paquet de données entrant au noeud ;
- suivant une deuxième étape à pointer une zone de la deuxième partie de la mémoire contenant au moins un nouvel en-tête et la direction sortante pour le ou les paquets sortant du noeud, l'adresse de la zône de la deuxième partie étant la somme du numéro d'identification du canal emprunté par le paquet en entrée du noeud et de la partie de mot définissant l'adresse de cette deuxième partie .

L'invention a pour principaux avantages qu'elle permet de réduire la taille de la mémoire nécessaire à l'identification et à l'aiguillage des cellules entrant dans les noeuds du réseau au travers des faisceaux et des canaux virtuels repérés par leurs identificateurs précités tout en conservant tous les faisceaux et canaux de transmission possibles, qu'elle peut s'adapter à différents modes de transmission et enfin qu'elle est simple à mettre en oeuvre.

D'autres caractéristiques et avantages de l'invention apparaîtront à l'aide de la description qui suit faite en regard des dessins annexés qui représentent :
- la figure 1a, un principe de commutation des canaux virtuels ;
- la figure 1b, un principe de commutation des faisceaux virtuels ;
- la figure 2, un exemple d'application typique de commutations ;
- la figure 3a, un exemple de format de cellule ;
- la figure 3b, un exemple de constitution d'un en-tête de cellule ;
- la figure 4, le passage d'une cellule à travers le noeud d'un réseau de transmission ;
- la figure 5, une illustration des étapes du procédé selon l'invention ;
- la figure 6a, une structure possible de l'adresse d'un mot de mémoire permettant le calcul de l'adresse du nouvel en-tête et de la direction d'une cellule sortant d'un noeud du réseau;
- la figure 6b, une structure possible du mot de mémoire précité ;
- la figure 7a, un mode de calcul possible de l'adresse d'une zone de mémoire contenant le nouvel en-tête et la direction d'une cellule sortant d'un noeud du réseau ;
- la figure 7b, une structure possible de la zone de mémoire précitée.

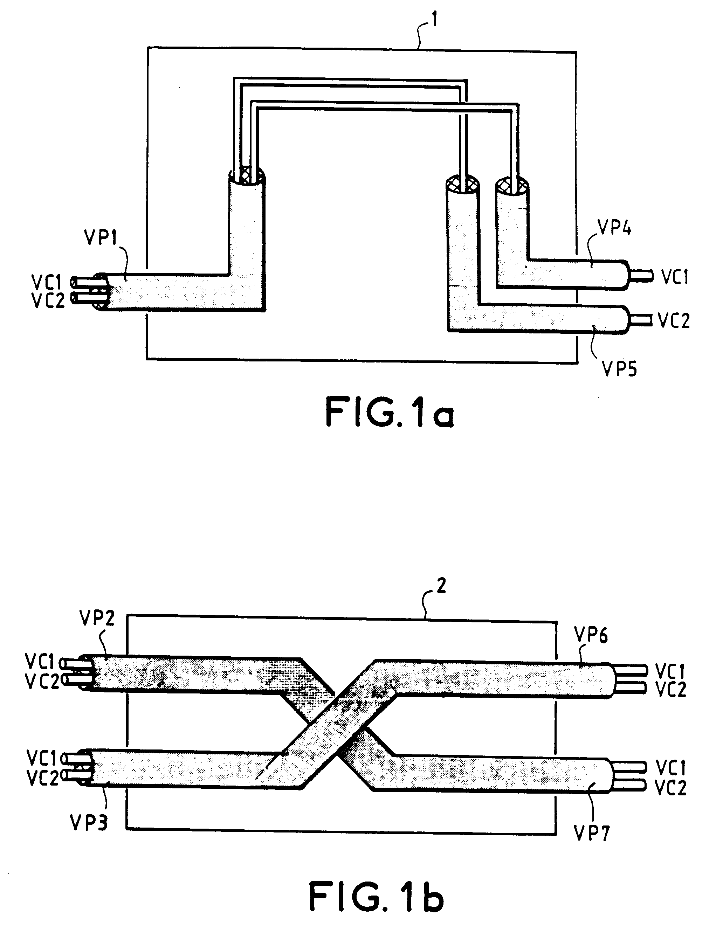

La figure 1a présente un principe de commutation de canaux virtuels, seul un faisceau VP1 entrant au noeud 1 d'un réseau est représenté. Le faisceau entrant VP1 contient deux canaux VC1 et VC2. L'interprétation des en-têtes des cellules transitant par ces canaux est telle qu'à ce faisceau entrant VP1 correspond en sortie du noeud 1 deux faisceaux VP4 et VP5 contenant chacun un canal VC1, le commutateur met en correspondance VP1-VC1 avec VP5-VC2 et VP1-VC2 avec VP4-VC1. La figure 1b présente un principe de commutation de faisceaux virtuels. Au faisceau VP2 entrant au noeud 2 d'un réseau correspond le faisceau sortant VP7 et au faisceau entrant VP3 correspond le faisceau sortant VP7. Dans ce cas, il n'y a pas eu de commutation de canaux, puisque les canaux VC1 et VC2 présents dans les faisceaux entrant VP2 et VP3 se retrouvent contenus dans les faisceaux sortant VP6 et VP7.

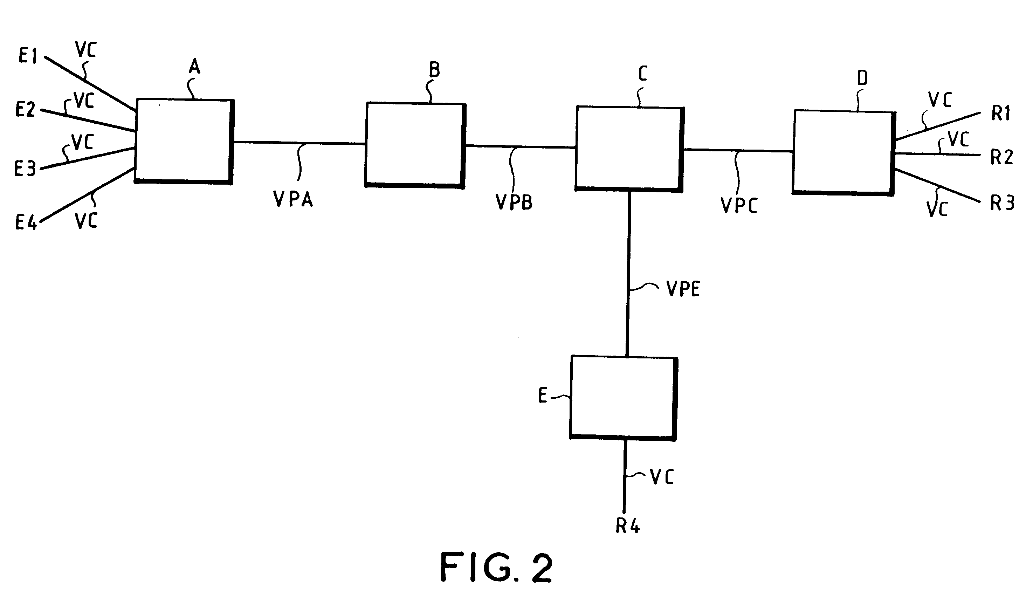

La figure 2 présente un exemple d'application typique de ces commutations. Les émetteurs E1, E2, E3 et E4 sont respectivement en communication avec les récepteurs R1, R2, R3 et R4. Au noeud A s'opère une commutation des canaux VC issus des émetteurs E1, E2, E3, E4 comme indiqué dans le cas de la figure 1a, pour donner le faisceau sortant VPA. Au noeud B s'opère des commutations de faisceaux comme indiqué dans le cas de la figure 1b, au noeud C, on commute les canaux virtuels de façon à mettre celui véhiculant les informations de E4 dans le faisceau virtuel VPE, et les trois autres dans le faisceau virtuel VPC, enfin aux noeuds D et E, aux faisceaux entrant VPC et VPE correspondent en sortie les quatre canaux VC dirigés vers les récepteurs R1, R2, R3 et R4. Entre les noeuds A et C, les faisceaux VPA, VPB conservent les canaux VC qui ne subissent aucune commutation.

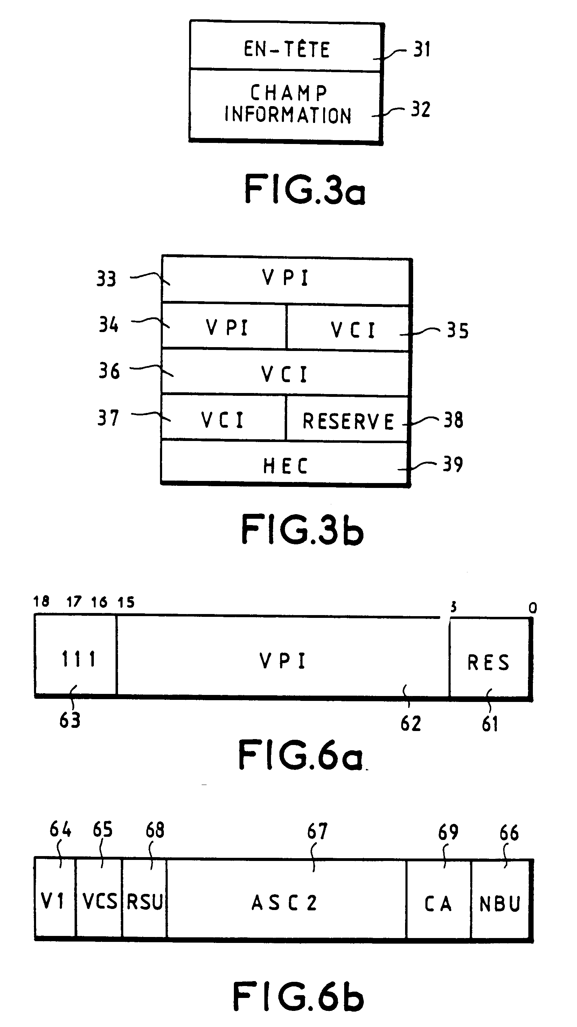

La figure 3a présente le format d'une cellule utilisé dans le mode de transmission ATM. Une cellule est constituée d'un en-tête 31 codé sur 5 octets, un octet étant un mot composé de 8 bits, et d'un champ information 32 codé sur 48 octets. Le champ information contient les données utiles à véhiculer. La figure 3b développe la constitution de l'en-tête 31 d'une cellule. Un octet et demi, 33, 34, soit 12 bits sont réservés au codage de l'identificateur VPI du faisceau auquel appartient la cellule, deux octets 35, 36, 37 soit 16 bits sont ensuite réservés au codage de l'identificateur VCI du canal auquel appartient la cellule, quatre bits de réserve 38 dont l'usage n'est pas défini ici. Enfin, un octet 39 est réservé pour générer un code de contrôle d'erreur de transmission désigné par l'abréviation HEC correspondant à l'expression anglo-saxonne " Header Error Control". Ce dernier octet 39 n'intervient pas dans la signification de l'en-tête.

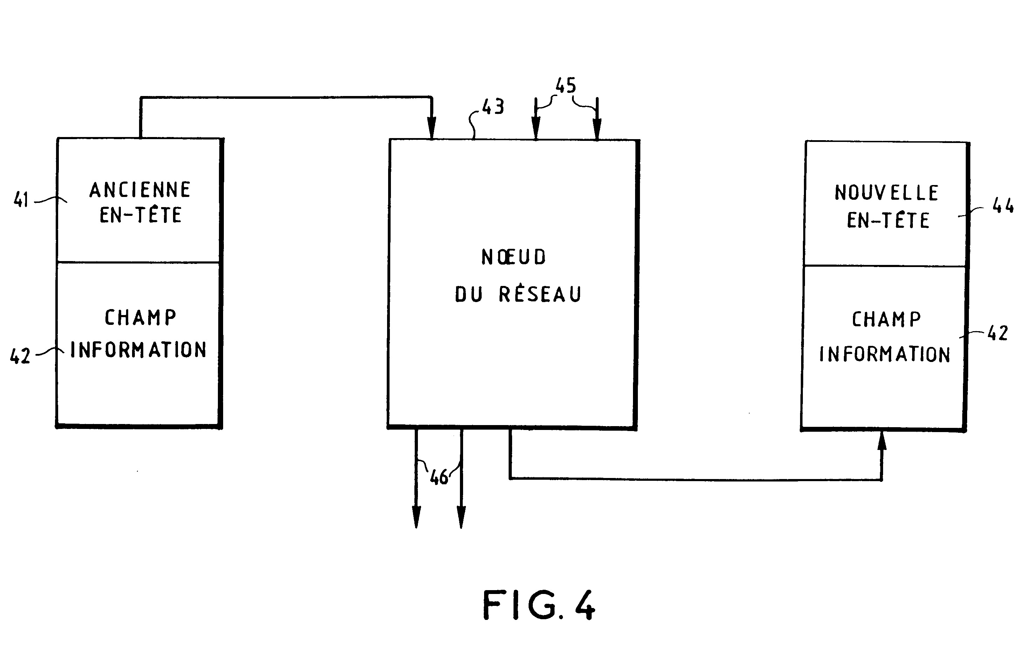

Pour permettre l'acheminement des cellules à travers le réseau de transmission, l'invention propose un procédé pour implémenter dans un matériel et au niveau de chaque noeud du réseau une fonction de traduction de l'en-tête qui donne pour chaque cellule un nouvel en-tête et une direction sortante en fonction de l'ancien en-tête de la cellule correspondante entrante et de sa direction entrante comme le montre la figure 4.

Les données utiles sont contenues dans le champ information 42, elles sont précédées par l'ancien en-tête 41, contenant les VPI et VCI entrant, par ailleurs l'information de direction de la cellule entrante au noeud 43 du réseau est disponible. Suivant l'ancien en-tête 41, la fonction de traduction selon l'invention associe au champ information 42 transitant par le noeud 43 un nouvel en-tête 44 en sortie de celui-ci, ainsi qu'une information désignant la direction sortante. Sur cette figure 4, les flèches 45 symbolisent d'autres directions entrantes dans le noeud du réseau, et les flèches 46 d'autres directions sortantes de ce noeud. Théoriquement, les numéros d'identification VPI et VCI étant codés respectivement sur 12 et 16 bits auxquels s'ajoutent quatre bits de réserve, l'espace d'adressage de la mémoire de travail 53 devrait être égal à 32 bits, or cela représente une taille de mémoire dépassant largement les capacités de réalisation actuelles et prévisibles dans un futur proche des mémoires rapides.

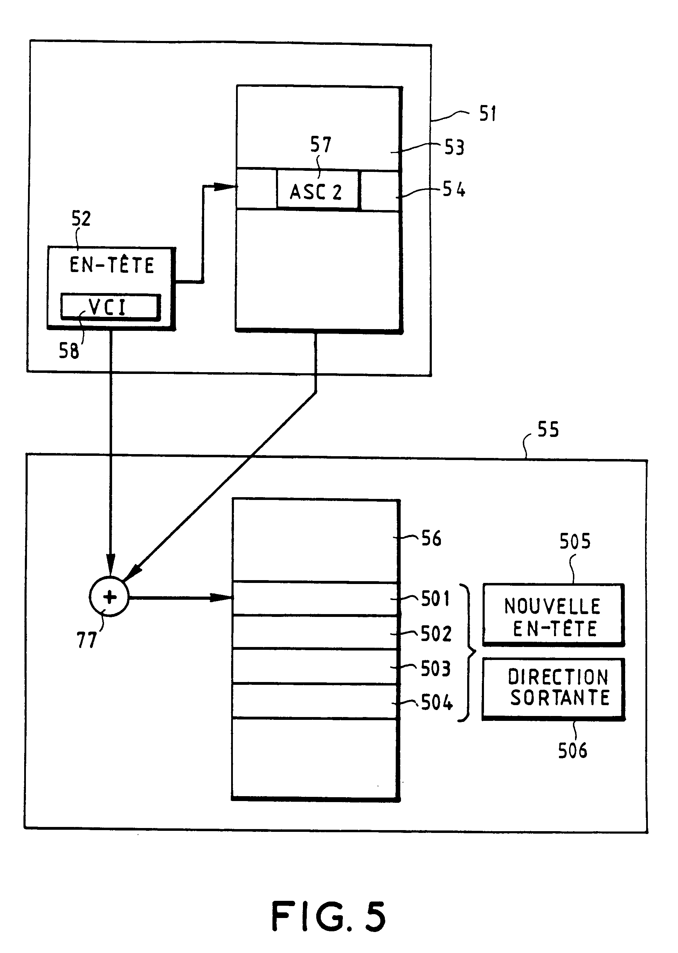

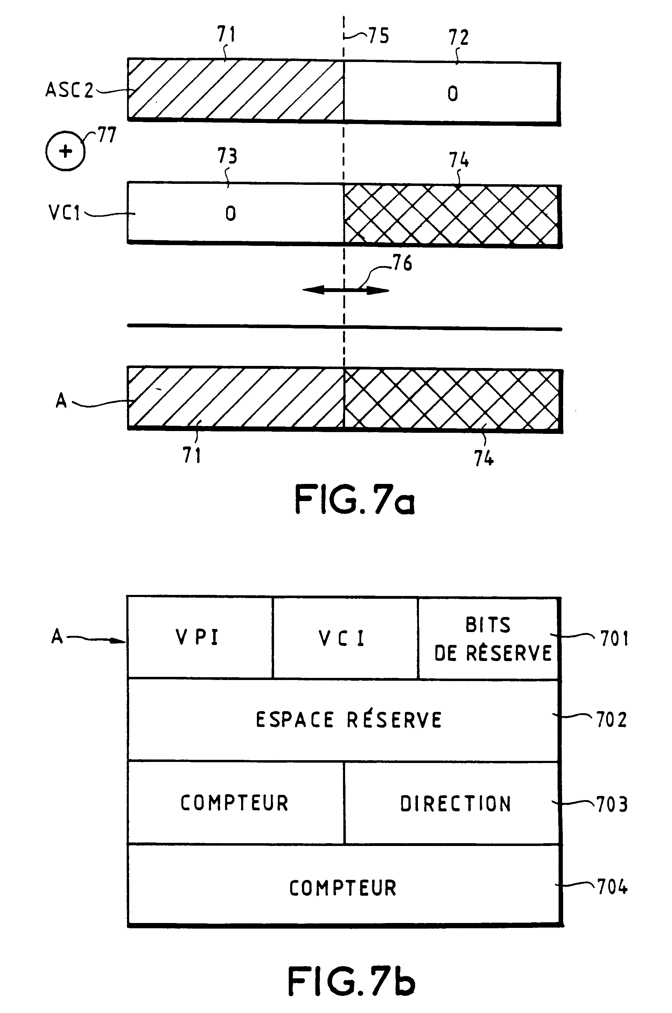

Pour éviter cet inconvénient, le procédé selon l'invention comporte deux étapes comme le montre la figure 5. Suivant une première étape 51, une adresse est extraite de l'en-tête 52 de la cellule. L'adresse extraite de l'en-tête 52 permet de pointer un mot 54 de la mémoire de travail 53. La donnée codée sur le mot 54 représente le nouvel en-tête et la direction sortante. L'adresse extraite de l'en-tête 52 est structurée suivant la figure 6a. Cette adresse est codée par exemple sur 19 bits. Les bits 0 à 3, 61, contiennent les bits de réserve 38 de l'en-tête, les bits 4 à 15 contiennent le code de l'identificateur VPI du faisceau entrant et présent dans l'en-tête comme l'a montré la figure 3b, enfin les trois bits de poids fort 16 à 18 sont par exemple positionnés à 1, ce codage de l'adresse extraite de l'en-tête peut être réalisé différemment, en particulier les bits de réserve 61 et les bits positionnés à 1 63 ne sont pas absolument nécessaires. Par ailleurs d'autres bits de codage pourraient être ajoutés, mais cela entraînerait une augmentation de la taille de la mémoire. Donc, à chaque combinaison des bits de l'en-tête entrant, à l'exception des bits codant le VCI et HEC, est associé un mot de la mémoire appelé contexte 1. Ce mot est pointé par l'adresse représentée en figure 6a, il est représenté par la figure 6b. Ce mot peut par exemple être codé sur 32 bits. Ce mot contient au moins un bit de validation V1 64, un bit VCS 65 indiquant s'il s'agit d'une commutation de faisceau ou de canal, 4 bits NBU 66 définissant le nombre de bits utiles pour coder l'identificateur VCI du canal contenu dans le faisceau entrant, et 16 bits 67 par exemple notés ASC2 définissant l'adresse de la zone mémoire où les canaux du faisceau entrant ont leur contexte de traduction. Ce contexte est noté contexte 2. Ce mot peut par ailleurs contenir un ou plusieurs bits de réserve RSV 68 et des bits CA 69 utilisés par exemple pour réaliser un comptage d'anomalies. La structure de l'adresse de la figure 6a et la structure du mot pointé par cette adresse proviennent du fait qu'à un instant donné, il est peu probable d'avoir à utiliser l'ensemble des combinaisons entre les identificateurs VPI et VCI, c'est-à-dire qu'il est possible de définir pour chaque faisceau le nombre de canaux qui sont utilisés. Ce nombre de canaux utilisés permet de définir le nombre de bits codant leurs identificateurs VCI correspondants, et cela grâce au fait, précisé dans la norme de transmission ATM par exemple, que la zone des identificateurs VCI attribués commence toujours à 0. Ce nombre de bits utiles codant les VCI est indiqué par le NBU 66. Les VCI étant par exemple codés au maximum sur 16 bits, le NBU codé sur 4 bits permet de déterminer le nombre de bits utilisés entre 1 et 16. Par exemple si le nombre de canaux utilisés est prévu au plus égal à 255, le nombre de bits utilisés sera égal à 8 et ce nombre 8 sera mémorisé par le NBU 66. Selon la figure 5, après la première étape 51 qui a permis de pointer le mot de mémoire 54 ou contexte 1, la deuxième étape 55 consiste, si le contexte 1 est validé par le bit V1 à adresser le contexte 2 qui est en fait le contexte de traduction qui fournit le nouvel en-tête 505 et la direction sortante 506. L'adresse qui pointe les informations donnant le nouvel en-tête et la direction sortante contenus par exemple par les mots 501, 502, 503 et 504 de la mémoire 56 d'adresses successives est constituée à partir de l'addition 77 des bits ASC2 57 du mot 54 et des bits utiles de codification des VCI 58. Les bits ASC2 ont été définis précédemment par la figure 6b.

La figure 7a indique comment est calculée selon l'invention l'adresse du mot 501 du contexte 2. Les bits ASC2 issus du mot 54 de la mémoire de contexte 1 est composé d'une partie 71 non nulle et d'une partie 72 où tous les bits sont positionnés à 0, ce nombre de bits positionnés à 0 correspond au nombre de bits utiles de codification du VCI, ce nombre est indiqué par la valeur du NBU codé sur le mot 54 de la mémoire de contexte 1. Le mot codant le VCI est ajouté aux bits ASC2. Ce mot est constitué d'une partie nulle 73 et d'une partie non nulle 74 codé sur le nombre de bits utiles indiqués par le NBU. Le trait 75 en pointillés indique que les parties 71 et 73 d'une part, 72 et 74 d'autre part ont un nombre égal de bits, en effet le mot ASC2 a un nombre de bits de poids faible positionnés à 0, ce nombre de bits de poids faible étant égal au nombre de bits utile codant le numéro d'identification VCI. La flèche 76 rappelle que ces nombres de bits peuvent varier et dépendent du nombre de bits utiles codant le VCI, c'est-à-dire dépendent en fait du nombre de canaux contenus dans le faisceau entrant. L'addition des mots ASC2 et VCI illustrée par le signe "plus " 77 donne l'adresse A composée des parties 71 et 74.

Cette adresse A permet de pointer les mots du contexte 2 qui définissent le nouvel en-tête ainsi que la direction sortante de la cellule. La cellule 7b donne un exemple de définition de ces mots du contexte 2 repérés sur la figure 5 par les numéros 501, 502, 503 et 504. Le mot 701 pointé par l'adresse A contient le nouvel en-tête de la cellule sortante à l'exception du code d'erreur HEC, le mot 701 contient en effet les identificateurs VPI et VCI correspondant au faisceau et au canal empruntés par la cellule en sortie du noeud ainsi que des bits de réserve. Le mot suivant 702 peut par exemple constituer un espace de réserve. Le mot suivant 703 peut contenir par exemple un compteur ainsi que l'information de direction sortante, enfin le mot suivant 704 peut aussi contenir par exemple un autre compteur d'utilisation. Cette définition des mots du contexte 2 est donnée à titre d'exemple, l'important étant que le nouvel en-tête ainsi que l'information de direction soient présents. Suite à la description du procédé, il apparaît que la mémoire de transit est divisée en deux zone, une zone correspondant aux mots de contexte 1 et une zone correspondant aux mots de contexte 2. Les données de cette mémoire peuvent par exemple être codées sur 32 bits. L'espace d'adressage de la zone de contexte 1 doit au moins être égale au nombre de bits de codification des VPI comme le montre la figure 6a, c'est-à-dire 12 bits. Eventuellement en ajoutant des bits de réserve et des bits prépositionnés, ce nombre peut atteindre 19 comme c'est le cas par exemple sur la figure 6a.

En ce qui concerne la zone de contexte 2, le nombre de bits N constituant l'espace d'adressage doit au moins être strictement supérieur au nombre de bits de codification des VCI pour avoir au moins un contexte 2 de traduction différent par contexte 1, dans l'exemple exposé ici le nombre de codification des VCI est égal à 16. Il est possible de choisir le nombre N de façon à obtenir le meilleur compromis entre le coût de la fonction de traduction selon l'invention et le nombre de canaux actifs à un moment donné. En fait, le nombre total de contextes de traduction est constant et déterminé, mais selon l'invention, il est réparti au mieux entre les différents faisceaux à un instant donné. Ainsi l'ensemble des combinaisons des éléments de l'en-tête entrante est possible, mais pas toutes à la fois, ce qui n'apporte aucune perturbation dans la pratique.

## Revendications

1. Procédé pour l'acheminement d'un paquet (31, 32) de données dans un réseau de transmission numérique utilisant au moins une mémoire (53, 56), chaque paquet, transitant dans des canaux virtuels eux-même contenus dans des faisceaux virtuels, étant composé d'un en-tête (31) contenant au moins les numéros (VPI, VCI) des faisceaux et des canaux virtuels qu'il emprunte, et d'une partie (32) contenant des informations à véhiculer, caractérisé en ce qu'il consiste à chaque noeud (43) du réseau et pour chaque paquet entrant :
- suivant une première étape (51) à pointer un mot (54) d'une première partie (53) de la mémoire contenant au moins une partie de mot (ASC2) définissant l'adresse d'une deuxième partie (56) de la mémoire, l'adresse du mot (54) contenant au moins le numéro d'identification (VPI, 62) du faisceau dans lequel transite le paquet de données entrant au noeud ;
- suivant une deuxième étape (55) à pointer une zone (501, 502, 503, 504) de la deuxième partie (56) de la mémoire contenant au moins un nouvel en-tête (505) et la direction sortante (506) pour le ou les paquets sortant du noeud, l'adresse (A) de la zône (501, 502, 503, 504) de la deuxième partie (56) étant la somme du numéro d'identification (VCI) du canal emprunté par le paquet (31, 32) en entrée du noeud et de la partie de mot (ASC2) définissant l'adresse de cette deuxième partie (56).

2. Procédé selon la revendication 1, caractérisé en ce que le mot (54) de la première partie (53) de mémoire contient au moins une information (66) définissant le nombre de bits utiles (74) pour coder le numéro d'identification (VCI) du canal emprunté par le paquet en entrée du noeud du réseau.

3. Procédé selon l'une quelconque des revendications précédentes, caractérisé en ce que le mot (54) de la prmeière partie (53) de mémoire contient un bit de validation (64)..

4. Procédé selon l'une quelconque des revendications précédentes, caractérisé en ce que le mot (54) de la première partie (53) de la mémoire contient un bit (65) indiquant si une commutation de faisceau ou de canal s'opère au noeud (43).

5. Procédé selon l'une quelconque des revendications précédentes, caractérisé en ce que le mot (54) de la première partie (53) de la mémoire contient des bits (69) effectuant un comptage d'anomalies.

6. Procédé selon l'une quelconque des revendications précédentes, caractérisé en ce que la partie de mot (ASC2) définissant l'adresse de la deuxième partie (56) a une longueur (72) de bits de poids faibles nuls supérieure ou égale à la longueur (74) du nombre de bits utiles codant le numéro d'identification (VCI) du canal du paquet entrant au noeud (43), les bits utiles du numéro d'identification (VCI) étant codés à partir de la valeur 0.

7. Procédé selon l'une quelconque des revendications précédentes, caractérisé en ce que la zone (501, 502, 503, 504) de la deuxième partie (56) de mémoire contient en outre un compteur (703, 704).
